# EUROPEAN PATENT APPLICATION

(11) **EP 4 703 439 A1**
(43) Date of publication of application: **04.03.2026**
(21) Application number: 24796604.7
(22) Date of filing: 12.03.2024
(51) Int. Cl.: C09D 11/105, B41M 1/28, B41M 1/30, C09D 11/08

(54) **METAL PRINTING INK COMPOSITION**

(30) Priority: 26.04.2023 JP 2023072392; 25.07.2023 JP 2023120353
(71) Applicant: Sakata INX Corporation, Osaka-shi, Osaka 541-0047 (JP)
(72) Inventor: KATO Sotaro, Osaka-shi, Osaka 541-0047 (JP); SAITO Kota, Osaka-shi, Osaka 541-0047 (JP); ARAKI Takashi, Osaka-shi, Osaka 541-0047 (JP)
(74) Representative: V.O.
(86) International application number: PCT/JP2024/009468
(87) International publication number: WO 2024/224846

(57) **Abstract**

To provide a metal printing ink composition capable of achieving favorable transferability during printing without extremely increasing an oil length of an alkyd resin.
The above-described problem is solved by a metal printing ink composition containing a coloring pigment, a resin, and a solvent. The metal printing ink composition comprises a rosin-modified resin having a hydroxyl value of 10 mg KOH/g or greater as at least a portion of the above-described resin, and at least one selected from the group consisting of compounds represented by general formula (1) below as the above-described solvent. In general formula (1) below, each A is independently an alkylene group having 2 to 4 carbons that may have branching, R is an alkyl group having 1 to 13 carbons that may have a branch structure and/or a ring structure, and n is an integer of 2 to 8.

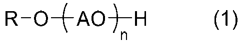

## Description

### FIELD OF THE INVENTION

The present invention relates to a metal printing ink composition.

### BACKGROUND ART

In printing, on a metal outer surface of a metal material, for example, a galvanized or tinned iron plate, an aluminum plate, a metal can composed of these metal materials, or the like, a metal printing ink composition having a binder resin such as an alkyd resin, a polyester resin, or an epoxy resin, and an organic solvent such as a mineral oil or a higher alcohol as main vehicle components is used.

Further, these printed surfaces are generally coated with overprint varnish to improve an adhesion, a bending resistance, an impact resistance, an abrasion resistance, and the like of an ink film. As these overprint varnishes, solvent-type varnishes composed of a binder resin such as an alkyd resin, a polyester resin, an acrylic resin, or an epoxy resin, a curing agent such as a melamine resin or a benzoguanamine resin, and an organic solvent such as a mineral oil or a cello solve-based solvent have been widely used.

Then, in printing on metal outer surfaces, ink printing is performed by using an offset printing machine, a dry offset printing machine, or the like, overprint varnish is then applied wet-on-wet over the ink coating-film by using a coater or the like, and baking is subsequently performed at 150 to 280°C.

By the way, in recent years, due to problems of atmospheric pollution caused by solvents and concerns about hygiene and safety in printing work environments, aqueous overprint varnishes instead of the solvent-type overprint varnishes used in the related art are commonly adopted in the field of metal printing as well. However, in a case in which the aqueous overprint varnish is applied over the ink film of the metal printing ink composition in the related art, phenomena including repelling of the aqueous overprint varnish, penetration of the aqueous overprint varnish into the ink film, and the like occur, resulting in the problem of significant deterioration in quality in glossiness, adhesion, or the like of the coating film. Therefore, for ink compositions as well, excellent compatibility with aqueous overprint varnishes has been required.

As methods of improving the compatibility with such aqueous overprint varnishes, for example, Patent Document 1 proposes the use of alkylene glycol-based solvents having 4 to 8 carbons, Patent Document 2 proposes the use of polyoxyalkylene glycol-based solvents, Patent Document 3 proposes the use of polyoxyalkylene alkyl ether-based organic solvents, and Patent Document 4 proposes the use of polyoxyalkylene alkyl ester-based solvents. The organic solvents used in these ink compositions are effective in improving the compatibility of an ink composition with aqueous overprint varnishes, but there is room for improvement in aspects of a tendency for insufficient fluidity of the ink composition, a tendency to cause misting during printing, and the like.

In a case in which an attempt is made to improve the fluidity of the metal printing ink composition and the misting during printing, there is also a method of using a solvent having low polarity such as a high-boiling-point aromatic hydrocarbon, as described in the examples of Patent Document 5, for example. However, recently, aqueous overprint varnish products with solvent components reduced to an extreme limit have been distributed for the purpose of further reducing environmental load and, in a case in which such overprint varnishes are used, there is also the problem of occurrence of repelling with ink compositions that use low-polarity solvents.

Further, in recent years, higher speed printing has been pursued in metal printing as well for the purpose of improving productivity. From the perspective of responding to such higher speed printing, a transferability of the ink composition is important. Then, from the perspective of ensuring the transferability of the ink composition, it is considered effective to increase an oil length of an alkyd resin contained in the ink composition. However, with an ink composition containing an alkyd resin having a long oil length, the compatibility with aqueous overprint varnishes such as described above worsens, making the problem of repelling of the aqueous overprint varnish on the printed ink composition surface more likely. That is, a trade-off relationship between an increase in the oil length based on the perspective of transferability and a coating suitability with respect to the aqueous overprint varnish occurs and has become one of the technical challenges.

### PRIOR ART DOCUMENTSPatent Documents

Patent Document 1: Japanese Examined Patent Publication No. 1993-75031, Patent Document 2: Japanese Examined Patent Publication No. 1993-40791, Patent Document 3: Japanese Examined Patent Publication No. 1993-40792, Patent Document 4: Japanese Laid-Open Patent Application Publication No. 1989-60670, Patent Document 5: Japanese Laid-Open Patent Application Publication No. 2009-249435.

### SUMMARY OF THE INVENTION

### Problems to be Solved by the Invention

The present invention has been made in view of such circumstances, and an object thereof is to provide a metal printing ink composition capable of achieving favorable transferability during printing without extremely increasing an oil length of an alkyd resin.

### Means for Solving the Problems

The present inventors conducted extensive studies to solve the problems described above and, as a result, found that the problems described above can be solved by using an ink composition including both a rosin-modified resin having a hydroxyl value of 10 mg KOH/g or greater as at least a portion of a resin contained in the ink composition, and a polyoxyalkylene alkyl ether-based solvent represented by general formula (1) below, thereby completing the present invention. Specifically, the present invention provides the following.

(1) According to an aspect of the present invention, a metal printing ink composition containing a coloring pigment, a resin, and a solvent comprises a rosin-modified resin having a hydroxyl value of 10 mg KOH/g or greater as at least a portion of the above-described resin, and at least one selected from the group consisting of compounds represented by general formula (1) below as the above-described solvent. 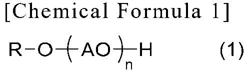 (In the above-described general formula (1), each A is independently an alkylene group having 2 to 4 carbons that may have branching, R is an alkyl group having 1 to 13 carbons that may have a branch structure and/or a ring structure, and n is an integer of 2 to 8.)
(2) Further, according to an aspect of the present invention, the metal printing ink composition according to (1) further comprises 1 to 8 mass% of hydrophilic silica particles.
(3) Further, according to an aspect of the present invention, in the metal printing ink composition according to (1) or (2), the above-described rosin-modified resin has an acid value of 100 mg KOH/g or less.
(4) Further, according to an aspect of the present invention, in the metal printing ink composition according to any one of (1) to (3), the above-described rosin-modified resin imparts a dissolved varnish having an n-hexane tolerance exceeding 50 g/5 g as measured by the procedure below when 70 g of the rosin-modified resin is dissolved in 30 g of tripropylene glycol monobutyl ether heated to 130°C by stirring for 60 minutes.
   Procedure: Cool the dissolved varnish to room temperature, collect 5 g of the dissolved varnish in a beaker, then, while maintaining a liquid temperature in this beaker at 25°C, add n-hexane in small amounts to the dissolved varnish in the beaker while stirring, and determine a mass (g) of the n-hexane required to initiate cloudiness in the liquid in the beaker. The mass (g) of the n-hexane thus determined is defined as the n-hexane tolerance (g/5g).
(5) Furthermore, according to an aspect of the present invention, in the metal printing ink composition according to any one of (1) to (4), the above-described rosin-modified resin is a rosin ester resin.

### Effect of the Invention

According to the present invention, provided is a metal printing ink composition capable of achieving favorable transferability during printing without extremely increasing an oil length of an alkyd resin.

### Embodiments of the Invention

First, an embodiment of a metal printing ink composition of the present invention will be described. It should be noted that the present invention is not limited to the following embodiment, and can be implemented with appropriate modifications within the scope of the present invention.

The ink composition of the present invention is used for metal printing and is preferably applied to printing by a so-called dry offset printing method that uses a relief plate as the printing plate, or an offset printing method that uses a planographic plate as the printing plate, but can be applied to all printing methods generally used in metal printing. Further, even when aqueous overprint varnish (OP varnish) is applied wet-on-wet immediately after printing with the ink composition, the ink composition of the present invention can suppress repelling of the coated OP varnish, making it possible to not only preferably apply the ink composition to two-piece can printing in which such printing and coating methods are adopted, but also preferably use the ink composition in three-piece can printing. According to the ink composition of the present invention, it is possible to maintain favorable transferability even in a case in which a content of the pigment must be set high, as with white ink compositions, for example. Furthermore, according to the ink composition of the present invention, it is possible to achieve favorable transferability during printing without extremely increasing an oil length of an alkyd resin, and thus perform printing that achieves both suppression of repelling and favorable transferability during printing, even when aqueous OP varnish obtained by reducing a solvent component is applied wet-on-wet.

The ink composition of the present invention is a metal printing ink composition containing a coloring pigment, a resin, and a solvent and includes a rosin-modified resin having a hydroxyl value of 10 mg KOH/g or greater as at least a portion of the above-described resin, and at least one selected from the group consisting of compounds represented by general formula (1) as the above-described solvent. Hereinafter, each component will be described.

### [Resin]

The ink composition of the present invention includes a rosin-modified resin having a hydroxyl value of 10 mg KOH/g or greater as at least a portion of a resin contained in the ink composition. The ink composition of the present invention is completed based on the finding that, by the inclusion of such a rosin-modified resin having a high hydroxyl value, the transferability of the ink composition during printing is improved. Further, at the same time, the ink composition of the present invention including such a rosin-modified resin conceivably increases a polarity of the composition itself, increasing an affinity for the aqueous OP varnish having similar high polarity, and thus exhibiting an effect of suppressing repelling even when this ink composition is applied wet-on-wet.

A rosin-modified resin is a resin prepared by using rosin as one raw material. Rosin contains resin acids such as abietic acid, palustric acid, isopimaric acid, and levopimaric acid as a mixture, and these resin acids contain hydrophilic and chemically active carboxy groups, some of which also have conjugated double bonds. Therefore, various rosin-modified resins are prepared by carrying out condensation polymerization in combination with polyhydric alcohols or polybasic acids, adding resol, which is a condensate of phenol, to benzene rings included in a rosin skeleton, and causing a Diels-Alder reaction with maleic anhydride or maleic acid, which are dienophiles, to add a maleic acid or maleic anhydride skeleton, or the like. Various types of such rosin-modified resins are commercially available and can also be obtained and used.

Examples of the rosin-modified resin include rosin ester resins, maleated rosins, fumarated rosin resins, rosin-modified maleic acid resins, rosin-modified fumaric acid resins, rosin-modified phenol resins, rosin-modified alkyd resins, rosin-modified polyester resins, and the like. In the present invention, any of these rosin-modified resins may be used, but among these, rosin ester resins are preferably used.

The hydroxyl value of the rosin-modified resin is 10 mg KOH/g or greater, preferably 15 mg KOH/g or greater, and more preferably 20 mg KOH/g or greater. Further, examples of an upper limit of the hydroxyl value of the rosin-modified resin, although not particularly limited, include about 200 mg KOH/g, preferably about 150 mg KOH/g, and more preferably about 100 mg KOH/g.

Further, examples of an acid value of the rosin-modified resin, although not particularly limited, preferably include 100 mg KOH/g or less. The acid value of the rosin-modified resin being 100 mg KOH/g or less makes it possible to achieve both suppression of repelling when aqueous OP varnish is applied wet-on-wet, and printing suitability such as suppression of misting and dot gain, and is thus preferred. Examples of the acid value of the rosin-modified resin more preferably include 80 mg KOH/g or less, and even more preferably include 50 mg KOH/g or less.

The rosin-modified resin is used in a varnished state of being dissolved or dispersed by being heated together with a solvent described later. The rosin-modified resin may be used as a dissolved varnish in a state of being dissolved or dispersed in the solvent or, when a varnish is prepared, may be used with a gelled varnish obtained by adding a divalent or higher metal alkoxy compound as a gelling agent to the dissolved varnish obtained by dissolving the resin. Among these, preparing a dissolved varnish from the rosin-modified resin and using this dissolved varnish to prepare the ink composition can improve the transferability of the ink composition during printing, and is thus preferred. Further, preparing a gelled varnish from the rosin-modified resin and using this gelled varnish to prepare the ink composition can impart appropriate viscoelasticity to the ink composition, improve fluidity and reduce misting, and form a more robust cured film.

Examples of a content of the rosin-modified resin in the ink composition preferably include 5 to 50 mass% with respect to the composition as a whole, more preferably include 5 to 25 mass% with respect to the composition as a whole, and even more preferably include 7 to 20 mass% with respect to the composition as a whole.

The ink composition of the present invention preferably contains an alkyd resin in addition to the above-described rosin-modified resin. An alkyd resin is a condensation polymer of polyhydric alcohols and polybasic acids and is a type of polyester, but is also prepared by conducting condensation polymerization together with animal and vegetable oils and/or fatty acids thereof in addition to these. At this time, the animal and vegetable oils undergo transesterification with the polyhydric alcohols to form fatty acids and are incorporated into a structure of the alkyd resin. A proportion derived from the fatty acids of animal and vegetable oils in the alkyd resin is called an oil length, and examples of the oil length of the alkyd resin used in the present invention preferably include 20 to 50 mass%. It should be noted that oil-free alkyd, which is an alkyd resin that does not contain fatty acid components of animal and vegetable oils, may be used.

Various types of alkyd resins can be used as the alkyd resin in the present invention, but among these, a coconut-oil-modified alkyd resin is preferably used. Use of the coconut-oil-modified alkyd resin as the alkyd resin makes it possible to achieve favorable dispersion stability of the ink composition and favorable hue with high transparency, and is thus preferred.

As such an alkyd resin, one prepared by using phthalic acid (orthophthalic acid) as a polybasic acid and having a phthalic acid skeleton can be preferably used. Such an alkyd resin is used, making it possible to improve the transferability of the ink and further enhance whiteness in white ink.

Examples of a content of the alkyd resin in the ink composition preferably include 10 to 40 mass% with respect to the composition as a whole, more preferably include 10 to 30 mass% with respect to the composition as a whole, and even more preferably include 15 to 25 mass% with respect to the composition as a whole.

In the ink composition of the present invention, in addition to the rosin-modified resin and the alkyd resin described above, resins used in the preparation of metal printing ink compositions in the related art can also be used in combination. That is, known resins compatible with the rosin-modified resin and the alkyd resin described above can be used singly or in combination in accordance with required performance such as printing suitability and coating film properties. Examples of such resins include polyester resins, petroleum resins, epoxy resins, ketone resins, amino resins, benzoguanamine resins, and the like.

### [Solvent]

The ink composition of the present invention includes, as a solvent, at least one selected from the group consisting of compounds represented by general formula (1) below. Hereinafter, at least one solvent selected from the group consisting of compounds represented by the general formula (1) below is also called a specific solvent.

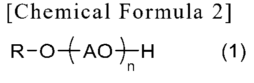

In the above-described general formula (1), each A is independently determined and is an alkylene group having 2 to 4 carbons that may have branching. Examples of such an alkylene group include an ethylene group [-(CH₂)₂-], a propylene group [-CH₂(CH₃)-CH₂- or -CH₂CH₂( CH₃)-], a trimethylene group [-(CH₂)₃-], an isopropylidene group [-C(CH₃)₂-], and the like.

In the above-described general formula (1), R is an alkyl group having 1 to 13 carbons that may have a branch structure and/or a ring structure. It should be noted that this alkyl group may be not only an aliphatic group but also an alicyclic group. Examples of such an alkyl group include a methyl group, an ethyl group, a propyl group, an isopropyl group, a butyl group, a hexyl group, a 2-ethylhexyl group, an octyl group, a decyl group, a cyclohexyl group, and the like.

In the above-described general formula (1), n is an integer of 2 to 8. n being 2 or greater makes it possible to ensure a sufficient boiling point of the specific solvent to impart stability to the ink composition on a printing machine, and thus is preferred, and n being 8 or less makes it possible to achieve a viscosity preferable as a solvent for the ink composition.

Examples of the compounds represented by the above-described general formula (1) include dipropylene glycol monomethyl ether, dipropylene glycol monobutyl ether, dipropylene glycol monooctyl ether, dipropylene glycol tridecyl ether, tripropylene glycol monobutyl ether, tripropylene glycol monodecyl ether, tetrapropylene glycol monohexyl ether, pentapropylene glycol monobutyl ether, hexapropylene glycol monomethyl ether, and the like.

Examples of a content of the specific solvent in the ink composition of the present invention preferably include 5 to 40 mass% with respect to the composition as a whole, and more preferably include 10 to 30 mass% with respect to the composition as a whole. The content of the specific solvent being 5 mass% or greater with respect to the composition as a whole makes it possible to enhance the compatibility of the rosin-modified resin in the ink composition and effectively suppress repelling when the aqueous OP varnish is applied wet-on-wet after printing, and is thus preferred.

Here, the rosin-modified resin mentioned above preferably imparts a dissolved varnish having an n-hexane tolerance exceeding 50 g/5 g when 70 g of the rosin-modified resin is dissolved in 30 g of tripropylene glycol monobutyl ether heated to 130°C by stirring for 60 minutes. It should be noted that measurement of the n-hexane tolerance does not require any particular effort as described later, and thus this selecting task does not require excessive trial and error. A rosin-modified resin that satisfies such conditions is used, making it possible to make the compatibility of the rosin-modified resin in the ink composition favorable and further enhance the transferability of the ink composition during printing. Further, the tripropylene glycol monobutyl ether described above is an ether of tripropylene glycol, which is a polymer of three molecules of propylene oxide, and butanol, and is one specific solvent in the present invention.

Next, a method of measuring the n-hexane tolerance of the resin in the present invention will be described. First, a dissolved varnish is prepared by arranging 70 g of the rosin-modified resin to be measured and then dissolving this rosin-modified resin in 30 g of tripropylene glycol monobutyl ether heated to 130°C by stirring for 60 minutes. Next, the dissolved varnish thus obtained is cooled to room temperature and 5 g of the dissolved varnish is collected in a beaker, then, while maintaining a liquid temperature in the beaker at 25°C, n-hexane is added in small amounts to the dissolved varnish in the beaker while stirring, and a mass (g) of n-hexane required to initiate cloudiness in the liquid in the beaker is determined. The mass (g) of the n-hexane thus determined is the n-hexane tolerance (g/5g). It should be noted that this measurement is so sensitive that adding just one drop of the n-hexane to the solution right before cloudiness occurs will immediately initiate cloudiness. Therefore, measurement errors due to variation in determining onset of cloudiness caused by measurer differences are not particularly problematic.

### [Coloring Pigment]

A coloring pigment is a component for imparting coloring power to the ink composition. Examples of the coloring pigments include, without particular restriction, organic and/or inorganic pigments used in printing ink compositions in the past.

Such coloring pigments are exemplified by yellow pigments such as Disazo Yellow (Pigment Yellow 12, Pigment Yellow 13, Pigment Yellow 17, and Pigment Yellow 1) and Hansa Yellow; magenta pigments such as Brilliant Carmine 6B, Lake Red C, and Watching Red; cyan pigments such as phthalocyanine blue, phthalocyanine green, and alkali blue; black pigments such as carbon black; white pigments such as titanium oxide; fluorescent pigments; and the like. Further, in the present invention, metal powder pigments for imparting metal colors such as gold or silver to the ink composition are also treated as coloring pigments. Examples of such metal powder pigments include gold powder, bronze powder, aluminum paste obtained by processing aluminum powder into a paste form, mica powder, and the like.

An added amount of the coloring pigment is exemplified by about 5 to 50 mass% with respect to the ink composition as a whole, but is not particularly limited. It should be noted that, in a case of preparing a yellow ink composition using yellow pigment, a magenta ink composition using magenta pigment, a cyan ink composition using cyan pigment, and a black ink composition using black pigment, it is also possible to use pigments of other colors in combination as complementary colors, or add ink compositions of other colors.

### [Other Components]

In the ink composition of the present invention, known curing agents, pigment dispersants, solvents other than the above-described specific solvent, wax, silica particles, stabilizers, and the like can be added as necessary as other components.

As curing agents, for example, amino resins such as melamine resins and benzoguanamine resins can be used.

Examples of solvents other than the above-described specific solvent include aliphatic hydrocarbons or alicyclic hydrocarbons having a boiling point range of about 230 to 400°C, aromatic hydrocarbons such as alkylbenzenes, higher alcohols, and the like.

Silica particles are commercially available as SiO₂ powder and, in particular, hydrophilic silica particles that have not been surface-treated or have been hydrophilization-treated, hydrophobic silica particles that have been hydrophobization-treated, and the like can be easily obtained. Among these silica particles, the hydrophilic silica particles are preferably used in the ink composition of the present invention. Use of the hydrophilic silica particles makes it possible to make the transferability of the ink composition during printing more favorable and enhance the fluidity of the ink composition, and thus is preferred. Examples of a content of the silica particles in the ink composition preferably include 1 to 8 mass%, and more preferably include 2 to 5 mass%.

The ink composition of the present invention can be prepared by a typical method of mixing each component of the coloring pigment, the resin, the solvent including the specific solvent, and the like, and of using a roll mill, a ball mill, a bead mill, or the like. A viscosity of the ink composition can be exemplified by a value based on a Laray viscometer at 25°C being 10 to 70 Pa·s, but is not particularly limited.

Examples of the metals for metal printing in the ink composition of the present invention, although not particularly limited, include galvanized or tinned iron plates, aluminum plates, metal cans composed of these metal materials, and the like.

Further, as the aqueous OP varnish applied over the printed ink composition, a typically used aqueous OP varnish can be used. Specifically, examples include aqueous OP varnish obtained by combining an aqueous acrylic resin, an aqueous polyester resin, an aqueous alkyd resin, an aqueous epoxy resin, a modified resin composed of two or more of these types, or the like as a binder, and an amino resin as a curing agent, and the like.

In a case of printing on a metal material surface by using the ink composition and the aqueous OP varnish, first, printing may be performed by using the ink composition of the present invention with a dry offset printing machine, an offset printing machine, or the like, then, with the ink composition not dried (wet-on-wet), the aqueous OP varnish may be over-applied by a coater or similar device, and subsequently baking may be performed at 150 to 280°C for several seconds to several minutes.

### Examples

Hereinafter, the ink composition of the present invention will be described more specifically by way of examples, but is not limited to these examples.

### [Synthesis of Alkyd Resin]

First-stage esterification was performed by reacting 5.98 parts by mass of neopentyl glycol, 8.53 parts by mass of pentaerythritol, 10.10 parts by mass of coconut-oil fatty acid, 11.95 parts by mass of isophthalic acid, and 2.48 parts by mass of terephthalic acid at 220°C under a nitrogen atmosphere until the acid value of the mixture reached 7 mg KOH/g. Subsequently, second-stage esterification was performed by adding 0.70 parts by mass of trimellitic anhydride and heating the mixture at 165°C for 30 minutes under a nitrogen atmosphere. These esterification reactions were performed in accordance with typical methods to obtain an alkyd resin having a weight-average molecular weight of 15,303 and a number-average molecular weight of 1,484. 21.8 parts by mass of tripropylene glycol monobutyl ether (which corresponds to the above-described specific solvent) and 2.0 parts by mass of triethanolamine were added to this alkyd resin to form an alkyd resin varnish.

### [Preparation of Varnish 1]

A varnish 1 was obtained by heating and dissolving 61.6 parts by mass of a rosin ester resin (hydroxyl value: 40 to 50 mg KOH/g, acid value: 10 to 20 mg KOH/g, weight-average molecular weight: 744, number-average molecular weight: 701) and 35.9 parts by mass of tripropylene glycol monobutyl ether at 130°C for one hour, and then adding 2.5 parts by mass of aluminum ethylacetoacetate diisopropylate and heating the mixture at 130°C for 30 minutes. This varnish 1 was a gelled varnish containing the rosin ester resin (hydroxyl value: 40 to 50 mg KOH/g). It should be noted that, for the rosin ester resin used in the preparation of the varnish 1, an n-hexane tolerance determined by the predetermined procedure of the present invention was 50 < g/5 g.

### [Preparation of Varnish 2]

A varnish 2 was obtained by heating and dissolving 63.2 parts by mass of a rosin ester resin (hydroxyl value: 20 to 30 mg KOH/g, acid value: < 10 mg KOH/g, weight-average molecular weight: 632, number-average molecular weight: 565) and 36.8 parts by mass of tripropylene glycol monobutyl ether at 130°C for one hour. This varnish 2 was a dissolved varnish containing the rosin ester resin (hydroxyl value: 20 to 30 mg KOH/g). It should be noted that, for the rosin ester resin used in the preparation of the varnish 2, an n-hexane tolerance determined by the predetermined procedure of the present invention was 50 < g/5 g.

### [Preparation of Varnish 3]

Varnish 3 was obtained by heating and dissolving 61.4 parts by mass of the same rosin ester resin as that used in the preparation of the above-described varnish 2 (hydroxyl value: 20 to 30 mg KOH/g, acid value: 10 mg KOH/g, weight-average molecular weight: 632, number-average molecular weight: 565) and 35.7 parts by mass of tripropylene glycol monobutyl ether at 130°C for one hour, and then adding 2.9 parts by mass of aluminum ethylacetoacetate diisopropylate and heating the mixture at 130°C for 30 minutes. The varnish 3 was a gelled varnish prepared by using the same rosin ester as that used in the preparation of the above-described varnish 2.

### [Preparation of Varnish 4]

Varnish 4 was obtained by heating and dissolving 61.4 parts by mass of maleated rosin resin (hydroxyl value ≈ 0 mg KOH/g, acid value: 220 ≤ mg KOH/g, weight-average molecular weight: 877, number-average molecular weight: 766) and 35.5 parts by mass of tripropylene glycol monobutyl ether at 130°C for one hour, and then adding 3.1 parts by mass of aluminum ethylacetoacetate diisopropylate and heating the mixture at 130°C for 30 minutes. This varnish 4 was a gelled varnish containing maleated rosin resin (hydroxyl value ≈ 0 mg KOH/g). It should be noted that, for the maleated rosin resin used in the preparation of the varnish 4, an n-hexane tolerance determined by the predetermined procedure of the present invention was 4.9 g/5 g.

### [Examples 1 to 6, Comparative Example 1]

The respective ink compositions of Examples 1 to 6 and Comparative Example 1 were prepared by mixing the components by the formulations in Table 1 and kneading the obtained mixtures with a three-roll mill. It should be noted that, in Table 1, "white pigment" is titanium oxide, "hydrophobic silica" is surface-hydrophobically-treated silica particles (manufactured by Nippon Aerosil Co., Ltd., product name: Aerosil R972), "hydrophilic silica" is surface-untreated silica particles (manufactured by Tokuyama Corporation, product name: Reolosil CP102), "clay" is organophilic bentonite (manufactured by BYK, product name: CLAYTONE-APA), and "specific solvent" is tripropylene glycol monobutyl ether. Further, the numerical values for each blending amount in Table 1 represent parts by mass.

### [Evaluation of Fluidity]

For each of the ink compositions of Examples 1 to 6 and Comparative Example 1, a slope measured at 25°C by using a spreadmeter in accordance with JIS K5101-6-1: 2004 is recorded in the "Slope" row of Table 1. It should be noted that the larger the slope value, the higher the fluidity of the ink composition.

### [Transferability]

For each of the ink compositions of Examples 1 to 6 and Comparative Example **1,** the transferability was evaluated by the following procedure. First, 0.15 cc of the ink composition was spread on a blanket (manufactured by Kinyosha Co., Ltd., Air Tack FS) by using an RI tester (manufactured by Akira Seisakusho Co., Ltd.) with a four-divided roll and, after leaving the ink composition for 10 minutes or 20 minutes, an aluminum plate serving as a printing target was attached to the blanket with the ink composition spread. When this was pressurized, the transferability of the ink composition was evaluated by visually determining whether the spread ink composition was transferred to the aluminum plate and the extent of the transfer. The evaluation criteria are as follows, and the results are shown in the "Transferability evaluation" row of Table 1.
Very good (VG): Transferred favorably even after being left for 20 minutes
Good (G) to Very good (VG): Transferred somewhat inadequately in a case of being left for 20 minutes, but favorably when left for 10 minutes
Good (G): Transferred unsuccessfully when left for 20 minutes, but favorably in a case of being left for 10 minutes
Poor (P): Transferred unsuccessfully even in a case of being left for 10 minutes

**[Table 1]**

| | Examples | | | | | | Comparative Examples |
|---|---|---|---|---|---|---|---|
| | 1 | 2 | 3 | 4 | 5 | 6 | 1 |
| Alkyd resin varnish | 20 | 20 | 30 | 25 | 30 | 25 | 20 |
| Varnish 1 | 15 | 15 | | | | | |
| Varnish 2 | | | 10 | 15 | | | |
| Varnish 3 | | | | | 10 | 15 | |
| Varnish 4 | | | | | | | 15 |
| White pigment | 50 | 50 | 50 | 50 | 50 | 50 | 50 |
| Hydrophobic silica | 4 | | | | | | 4 |
| Hydrophilic silica | | 4 | 4 | 4 | 4 | 4 | |
| Clay | 2 | 2 | 1 | 1 | 1 | 1 | 2 |
| Specific solvent | 8.5 | 8 | 4.8 | 4.7 | 6 | 6 | 11.5 |
| Total | 99.5 | 99 | 99.8 | 99.7 | 101.0 | 101.0 | 102.5 |
| Slope (mm) | 9.3 | 10.3 | 10.6 | 10.4 | 11.0 | 11.6 | 10.0 |
| Transferability evaluation | G | G | G | VG | G | G to VG | P |

Upon comparing the ink compositions of Examples 1 to 6 and the ink composition of Comparative Example 1, it can be seen that, by using a combination of the rosin-modified resin having the predetermined hydroxyl value of the present invention and the specific solvent, it is possible to improve the transferability of the ink composition without changing the oil length of the alkyd resin. Further, upon comparing Example 1 and Example 2, it can be seen that the ink composition using hydrophilic silica particles can maintain fluidity higher than the ink composition using hydrophobic silica particles.

## Claims

1. A metal printing ink composition containing a coloring pigment, a resin, and a solvent, the metal printing ink composition comprising:
a rosin-modified resin having a hydroxyl value of 10 mg KOH/g or greater as at least a portion of the resin; and
at least one selected from the group consisting of compounds represented by general formula (1) below as the solvent. 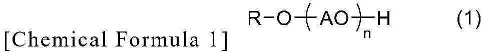
(In the above-described general formula (1), each A is independently an alkylene group having 2 to 4 carbons that may have branching, R is an alkyl group having 1 to 13 carbons that may have a branch structure and/or a ring structure, and n is an integer of 2 to 8.)

2. The metal printing ink composition according to claim 1, further comprising: 1 to 8 mass% of hydrophilic silica particles.

3. The metal printing ink composition according to claim 1 or 2, wherein the rosin-modified resin has an acid value of 100 mg KOH/g or less.

4. The metal printing ink composition according to any one of claims 1 to 3, wherein the rosin-modified resin imparts a dissolved varnish having an n-hexane tolerance exceeding 50 g/5 g as measured by the procedure below when 70 g of the rosin-modified resin is dissolved in 30 g of tripropylene glycol monobutyl ether heated to 130°C by stirring for 60 minutes (Procedure: Cool the dissolved varnish to room temperature, collect 5 g of the dissolved varnish in a beaker, then, while maintaining a liquid temperature in this beaker at 25°C, add n-hexane in small amounts to the dissolved varnish in the beaker while stirring, and determine a mass (g) of the n-hexane required to initiate cloudiness in the liquid in the beaker. The mass (g) of the n-hexane thus determined is defined as the n-hexane tolerance (g/5g)).

5. The metal printing ink composition according to any one of claims 1 to 4, wherein the rosin-modified resin is a rosin ester resin.
